# EUROPÄISCHE PATENTSCHRIFT

(11) **EP 2 664 826 B1**
(45) Veröffentlichungstag und Bekanntmachung des Hinweises auf die Patenterteilung: **18.02.2015**
(21) Anmeldenummer: 13163494.1
(22) Anmeldetag: 12.04.2013
(51) Int. Cl.: F16H 63/34, F16H 63/48, F16H 61/688, F16D 48/02, F16H 61/00, F16D 21/06

(54) **Aktuatoranordnung für einen Kraftfahrzeug-Antriebsstrang**
Actuator assembly for a motor vehicle drive train
Agencement d'actionneur pour une transmission de véhicule automobile

(30) Priorität: 15.05.2012 DE 102012010172
(43) Veröffentlichungstag der Anmeldung: 20.11.2013
(73) Patentinhaber: GETRAG Getriebe- und Zahnradfabrik Hermann Hagenmeyer GmbH & Cie KG, 74199 Untergruppenbach (DE)
(72) Erfinder: Ruehle, Guenter, 74369 Loechgau (DE); Kiehlneker, Alexander, 74223 Flein (DE)
(74) Vertreter: Witte, Weller & Partner Patentanwälte mbB

(56) Entgegenhaltungen:
- EP-B1- 1 236 918
- WO-A1-2006/002450
- DE-A1-102006 022 963
- DE-A1-102008 011 898
- DE-A1-102009 018 975
- US-A1- 2011 021 301

## Beschreibung

Die vorliegende Erfindung betrifft eine Aktuatoranordnung für einen Antriebsstrang, insbesondere einen Kraftfahrzeug-Antriebsstrang, der wenigstens eine Reibkupplung zur Übertragung von Antriebsmoment und ein Getriebe, insbesondere ein Stufenwechselgetriebe aufweist, wobei die Reibkupplung mittels eines Kupplungs-Hydraulikzylinders betätigbar ist, der zur Betätigung der Reibkupplung direkt mit einem Pumpenanschluss einer elektromotorisch angetriebenen Pumpe verbunden ist, derart, dass die Reibkupplung durch Verändern der Drehzahl der Pumpe betätigbar ist, und mit einer Parksperren-Aktuatoreinrichtung zur Betätigung einer Parksperrenanordnung des Antriebsstranges.

Ferner betrifft die vorliegende Erfindung einen Antriebsstrang mit einer Reibkupplung, einer Parksperrenanordnung und mit einer Aktuatoranordnung der oben genannten Art.

Antriebsstränge dieser Art sind beispielsweise in Form von automatisierten Schaltgetrieben oder in Form von Doppelkupplungsgetrieben sowie Wandler-Automatikgetrieben bekannt. Bei dieser Art von automatisierten Antriebssträngen werden Bedienelemente des Antriebsstranges automatisiert mittels geeigneter Aktuatoranordnungen betätigt, die beispielsweise hydraulischer, pneumatischer, elektromotorischer oder elektromagnetischer Art sein können.

Hydraulische Aktuatoranordnungen dieser Art sind in der Regel so aufgebaut, dass am Druckausgang einer Pumpe ein Druckregelventil angeschlossen ist, mittels dessen auf der Druckseite der Pumpe ein im Wesentlichen konstanter Leitungsdruck erzeugt wird. Aus diesem Leitungsdruck werden dann mittels weiterer Druckregelventile und/oder Wegeventile Stelldrücke für die einzelnen Bedienelemente abgeleitet. Die Pumpe ist dabei häufig mit einem Antriebsmotor des Antriebsstranges gekoppelt.

Aus dem gattungsbildenden Dokument EP 1 236 918 B1 ist eine Aktuatoranordnung für eine nasslaufende Lamellenkupplung bekannt, bei der ein Druckanschluss einer elektromotorisch angetriebenen Pumpe direkt, d.h. ohne Zwischenschaltung eines Druckregelventils, mit einem Anschluss eines Hydraulikzylinders zum Betätigen der Reibkupplung verbunden ist. Bei dieser Art von Aktuatoranordnung wird der Druck in dem Hydraulikzylinder und damit die Betätigungskraft bzw. der Betätigungsweg der Reibkupplung über die Drehzahl der Pumpe geregelt. Derartige Aktuatoranordnungen haben zum einen den Vorteil, dass die Pumpe und der Elektromotor entfernt von dem Hydraulikzylinder angeordnet werden können, so dass sich Bauraumvorteile ergeben können. Ferner kann mit einer solchen Aktuatoranordnung eine ähnliche Regelgüte erzeugt werden wie bei den eingangs beschriebenen Hydraulikkreisen, bei denen zunächst ein Leitungsdruck erzeugt wird. Schließlich ist vorteilhaft, dass die Aktuatoranordnung unabhängig von dem Betriebszustand des Antriebsmotors (Verbrennungsmotors) betrieben werden kann. Daher eignet sich diese Art von Aktuatoranordnung insbesondere auch für Hybrid-Antriebsstränge oder Elektrofahrzeuge.

Bei automatisierten Fahrzeuggetrieben wird in der Regel ein sog. Stillstandsmanagement gefordert. Herkömmliche handgeschaltete Fahrzeuge weisen zu diesem Zweck eine Handbremse auf, die bei sämtlichen Fahrzeugen obligatorisch ist. Bei handgeschalteten Fahrzeugen kann das Fahrzeug sich ferner selber halten, indem ein Gang eingelegt wird, da die Kupplung zwischen Getriebe und Verbrennungsmotor normalerweise geschlossen ist. Wandler-Automatikgetriebe weisen immer eine zusätzliche Parksperre auf. Auch in automatisierten Schaltgetrieben oder Doppelkupplungsgetrieben, insbesondere, wenn deren Reibkupplung(en) normalerweise offen ist, ist eine Parksperre in der Regel erforderlich. Die Betätigung der Parksperre kann rein mechanisch über ein Bedienelement von dem Fahrer aus erfolgen (P-Stellung des Schalthebels). Ferner ist es möglich, die Parksperre per Tastendruck (Park by wire) oder automatisiert bei einem Motorstopp zu betätigen. Im letzteren Fall ist eine entsprechende Aktuatorik im Getriebe zur Betätigung der Parksperre erforderlich.

Eine Parksperrenanordnung, die durch Hydraulikzylinder betätigt wird, ist beispielsweise aus dem Dokument DE 10 2006 022 963 A1 bekannt. Bei der Verwendung herkömmlicher hydraulischer Kreise, bei denen eine von einem Verbrennungsmotor angetriebene Pumpe einen Leitungsdruck erzeugt, kann die Betätigung einer solchen Parksperrenanordnung jedoch nicht unter allen Betriebsbedingungen gewährleistet werden.

Es ist daher eine Aufgabe der Erfindung, eine verbesserte Aktuatoranordnung sowie einen verbesserten Antriebsstrang anzugeben, bei dem eine Parksperrenanordnung in allen Betriebszuständen betätigbar ist und die einfach aufgebaut ist.

Diese Aufgabe wird durch eine Aktuatoranordnung gemäß Anspruch 1 gelöst, wobei die Parksperren-Aktuatoreinrichtung wenigstens einen Parksperren-Hydraulikzylinder aufweist, der mit der Pumpe verbunden ist, derart, dass die Parksperrenanordnung durch Verändern der Drehrichtung und/oder der Drehzahl der Pumpe betätigbar ist.

Ferner wird die obige Aufgabe gelöst durch einen Antriebsstrang mit einer Reibkupplung, einer Parksperrenanordnung und mit einer Aktuatoranordnung der erfindungsgemäßen Art.

Bei der erfindungsgemäßen Aktuatoranordnung wird eine Reibkupplung mittels eines Kupplungs-Hydraulikzylinders betätigt, der direkt mit einer elektromotorisch angetriebenen Pumpe verbunden ist. Durch Anschließen eines Parksperren-Hydraulikzylinders an die Pumpe lässt sich auch die Parksperrenanordnung durch Verändern der Drehrichtung und/oder der Drehzahl der Pumpe betätigen.

Demzufolge kann die Parksperren-Aktuatoreinrichtung mit wenigen Bauelementen realisiert werden.

Zudem ist eine Betätigung der Parksperrenanordnung auch dann möglich, wenn ein Antriebsmotor wie ein Verbrennungsmotor nicht läuft.

Durch die Tatsache, dass mittels nur einer einzigen Pumpe und eines einzelnen Elektromotors sowohl die Reibkupplung als auch die Parksperrenanordnung betätigbar sind, ergeben sich deutliche Bauraumvorteile. Da die Pumpe und der elektrische Motor räumlich getrennt von dem Kupplungs-Hydraulikzylinder und dem Parksperren-Hydraulikzylinder angeordnet werden können, ist eine Integration sowohl in bestehenden Getriebekonstruktionen als auch in räumlich beengten Getriebekonstruktionen möglich.

Ferner kann zum Ansteuern des elektrischen Motors das gleiche Steuergerät verwendet werden.

Insgesamt kann auf diese Weise ein "Park by wire"-System auf konstruktiv einfache Weise realisiert werden.

Die Aufgabe wird somit vollkommen gelöst.

Generell ist es möglich, dass die Pumpe als unidirektionale Pumpe ausgebildet ist und der Druckanschluss der Pumpe über eine einfache Ventilanordnung entweder mit dem Kupplungs-Hydraulikzylinder oder mit dem Parksperren-Hydraulikzylinder verbunden wird.

Von besonderem Vorzug ist es jedoch, wenn die Pumpe als bidirektionale Pumpe mit einem ersten und einem zweiten Pumpenanschluss ausgebildet ist, wobei der Kupplungs-Hydraulikzylinder mit dem ersten Pumpenanschluss verbunden ist und wobei der Parksperren-Hydraulikzylinder mit dem zweiten Pumpenanschluss verbunden ist.

Bei dieser Ausführungsform können sowohl der erste als auch der zweite Pumpenanschluss je nach Drehrichtung der Pumpe als Druckanschluss ausgebildet sein. In der einen Drehrichtung wird bei dieser Ausführungsform die Reibkupplung betätigt, in der anderen Drehrichtung die Parksperrenanordnung.

Da die Reibkupplung und die Parksperre in der Regel nicht gleichzeitig zu betätigen sind, ist mit dieser Ausführungsform kein funktionaler Nachteil verbunden.

Generell ist es hierbei möglich, die eine Drehrichtung der Pumpe ausschließlich der Betätigung der Reibkupplung zuzuordnen und die andere Drehrichtung ausschließlich der Betätigung der Parksperrenanordnung.

Es kann jedoch vorteilhaft sein, wenn die zweite Drehrichtung auch dazu verwendet wird, um die Reibkupplung schnell in der entgegengesetzten Richtung zu betätigen. Dies kann insbesondere dann vorteilhaft sein, wenn die Reibkupplung schnell zu öffnen ist (bei einer vorzugsweise vorgesehenen "normally open"-Reibkupplung), insbesondere auch im Falle eines Resets eines Steuergerätes des Antriebsstranges. Bei einem derartigen Reset wird die Pumpe vorzugsweise aktiv kurzzeitig in der entgegengesetzten Drehrichtung angetrieben, um die Reibkupplung schnellstmöglich zu öffnen.

Bei einem Doppelkupplungsgetriebe mit zwei Reibkupplungen kann hierdurch ein Verspannungszustand, bei dem die zwei Reibkupplungen der beiden Teilgetriebe zeitgleich geschlossen sind, obgleich in den Teilgetrieben jeweils eine Gangstufe eingelegt ist, schnellstmöglich aufgehoben werden.

Besonders bevorzugt ist es bei dieser Ausgestaltung, wenn an einer Verbindung zwischen dem zweiten Pumpenanschluss und dem Parksperren-Hydraulikzylinder ein elastisch vorgespannter Hydrospeicher angeschlossen ist.

Bei einem kurzfristigen Ansteuern der Pumpe in der zweiten Drehrichtung, um die Reibkupplung schnellstmöglich zu öffnen, wird der hierdurch in Richtung des Parksperren-Hydraulikzylinders strömende Volumenstrom von Hydraulikfluid zunächst in dem Hydrospeicher aufgenommen. Hierdurch wird eine ungewollte Betätigung des Parksperren-Hydraulikzylinders vermieden. Erst dann, wenn die Pumpe in der zweiten Drehrichtung so lange betrieben wird, bis der Hydrospeicher gefüllt ist, wird der dem zweiten Pumpenanschluss zugeordnete Parksperren-Hydraulikzylinder gefüllt, um die Parksperrenanordnung zu betätigen.

Ferner ist es insgesamt bevorzugt, wenn eine Verbindung zwischen einem Pumpenanschluss und dem Kupplungs-Hydraulikzylinder und/oder eine Verbindung zwischen dem Pumpenanschluss und dem Parksperren-Hydraulikzylinder über eine Blende oder Drossel mit festem Querschnitt mit einem Niederdruckbereich wie einem Tank verbunden ist.

Durch das Bereitstellen einer solchen Blende wird beim Zuführen von Hydraulikfluid zu dem jeweiligen Hydraulikzylinder ein Leck-Volumenstrom über die Blende eingerichtet. Hierdurch kann die Regelbarkeit verbessert werden. An der Verbindung zwischen dem Pumpenanschluss und dem jeweiligen Hydraulikzylinder kann dabei vorzugsweise ein Drucksensor vorgesehen sein, um auf diese Weise den Ist-Druck zu messen und über einen geeigneten Algorithmus in dem Steuergerät zu regeln.

Ferner ist es insgesamt vorteilhaft, wenn eine Verbindung zwischen einem Pumpenanschluss und dem Kupplungs-Hydraulikzylinder und/oder eine Verbindung zwischen dem Pumpenanschluss und dem Parksperren-Hydraulikzylinder über ein Saugventil mit einem Niederdruckbereich verbunden ist.

Bei dieser Ausführungsform kann sichergestellt werden, dass die Pumpe bei unterschiedlicher Drehrichtung immer Hydraulikfluid fördert und keine Luft saugt. Vorzugsweise sind dabei Rückleitungen zu dem Niederdruckbereich konstruktiv so angeordnet, dass der Rücklauf unter dem Fluidspiegel eines Fluidsumpfes des Antriebsstranges liegt.

Das Saugventil kann dabei als einfaches Rückschlagventil mit einer sehr geringen Federvorspannung realisiert werden.

Da ein Rückschlagventil keine erhöhten Anforderungen hinsichtlich Sauberkeit bei Fertigung und Montage erfordert, kann die Aktuatoranordnung zudem auf einfache Weise gefertigt werden. Insbesondere sind vorzugsweise keine Schieberventile in der erfindungsgemäßen Aktuatoranordnung vorgesehen, die erhöhte Anforderungen hinsichtlich Sauberkeit bei Fertigung und Montage mit sich bringen.

Die Reibkupplung des Antriebsstranges kann eine einzelne Reibkupplung beispielsweise eines automatisierten Schaltgetriebes oder eines Wandler-Automatikgetriebes sein.

Von besonderem Vorzug ist es jedoch, wenn die Aktuatoranordnung einen ersten Kupplungs-Hydraulikzylinder zum Betätigen einer ersten Reibkupplung des Antriebsstranges und einen zweiten Kupplungs-Hydraulikzylinder zum Betätigen einer zweiten Reibkupplung des Antriebsstranges sowie eine erste, direkt mit dem ersten Kupplungs-Hydraulikzylinder verbundene Pumpe und eine zweite, direkt mit dem zweiten Kupplungs-Hydraulikzylinder verbundene Pumpe aufweist.

Eine derartige Aktuatoranordnung eignet sich insbesondere zum Betätigen einer Doppelkupplungsanordnung eines Doppelkupplungsgetriebes. Hierbei verbindet die erste Reibkupplung einen Antriebsmotor mit einem ersten Teilgetriebe, und die zweite Reibkupplung verbindet den Antriebsmotor mit einem zweiten Teilgetriebe. Da die Reibkupplungen durch die jeweils eigenen Pumpen unabhängig voneinander ansteuerbar sind, können die Reibkupplungen in überschneidender Art und Weise betätigt werden, um Gangwechsel ohne Zugkraftunterbrechung durchzuführen.

Bei einem derartigen Antriebsstrang ist es generell möglich, nur eine der zwei Pumpen zur Betätigung der Parksperrenanordnung auszulegen.

Von besonderem Vorzug ist es jedoch, wenn die Parksperren-Aktuatoreinrichtung einen ersten Parksperren-Hydraulikzylinder zum Öffnen oder Schließen der Parksperrenanordnung und einen zweiten Parksperren-Hydraulikzylinder zum Ent- oder Verriegeln der Parksperrenanordnung in der geöffneten oder in der geschlossenen Position aufweist.

Bei Parksperrenanordnungen der oben beschriebenen Art dient der erste Parksperren-Hydraulikzylinder dazu, die Parksperrenanordnung zu öffnen (beispielsweise durch Abheben einer Sperrklinke aus der Verzahnung eines Parksperrenrades) oder zu schließen. Der erste Parksperren-Hydraulikzylinder ist dabei vorzugsweise ein einfach wirkender Hydraulikzylinder, so dass eine Feder die Parksperrenanordnung entweder in die Schließrichtung oder in die Öffnungsrichtung drückt. Besonders bevorzugt ist es, wenn der erste Parksperren-Hydraulikzylinder zum Öffnen der Parksperrenanordnung dient, also gegen eine in Schließrichtung wirkende Feder wirkt.

Der zweite Parksperren-Hydraulikzylinder dient zum Ent- oder Verriegeln der Parksperrenanordnung. Dies kann entweder ein Verriegeln in der geschlossenen Position sein, ist jedoch vorzugsweise ein Verriegeln in der geöffneten Position. Durch die Verriegelungseinrichtung kann der erste Parksperren-Hydraulikzylinder entlastet werden. Der zweite Parksperren-Hydraulikzylinder ist vorzugsweise ebenfalls ein einfach wirkender Hydraulikzylinder, der mittels einer Feder in die Verriegelungsposition gedrückt wird, so dass die Verriegelungseinrichtung selbsthaltend ist. In der Verriegelungsposition kann die Parksperrenanordnung geschlossen sein, ist jedoch vorzugsweise geöffnet, insbesondere dann, wenn der erste Parksperren-Hydraulikzylinder zum Öffnen der Parksperrenanordnung dient. Der zweite Parksperren-Hydraulikzylinder dient demzufolge vorzugsweise zum Entriegeln der Parksperrenanordnung.

Von besonderem Vorzug ist es bei der oben genannten Ausführungsform, wenn der erste Parksperren-Hydraulikzylinder mit der ersten oder mit der zweiten Pumpe verbunden ist und wenn der zweite Parksperren-Hydraulikzylinder mit der anderen Pumpe verbunden ist.

Bei dieser Ausführungsform, die insbesondere für ein Doppelkupplungsgetriebe ausgelegt ist, wird die der einen Reibkupplung zugeordnete elektromotorisch angetriebene Pumpe dem ersten Parksperren-Hydraulikzylinder zugeordnet, und die zweite, der zweiten Reibkupplung zugeordnete elektromotorisch angetriebene Pumpe wird dem zweiten Parksperren-Hydraulikzylinder zugeordnet.

Auf diese Weise kann auch eine komplexe Parksperrenanordnung mit zwei Parksperren-Hydraulikzylindern ohne wesentlichen Zusatzaufwand realisiert werden.

Bei der erfindungsgemäßen Aktuatoranordnung lässt sich die Parksperrenanordnung automatisiert oder per Tastendruck betätigen. Die Parksperrenanordnung kann dabei unabhängig von einem Antriebsmotor wie einem Verbrennungsmotor betätigt werden. Eine zusätzliche elektrische Aktuatorik ist für die Parksperrenanordnung nicht erforderlich. Es kann insbesondere die bereits in dem Antriebsstrang vorhandene Aktuatorik und elektrische Ansteuerung verwendet werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines erfindungsgemäßen Antriebsstranges mit einer schematischen Draufsicht auf eine Parksperrenanordnung;
- Fig. 2: eine schematische Schnittansicht entlang der Linie II-II der Fig. 1;
- Fig. 3: eine Aktuatoranordnung für den Antriebsstrang der Fig. 1 und 2; und
- Fig. 4: einen alternativen Antriebsstrang mit einer alternativen Aktuatoranordnung.

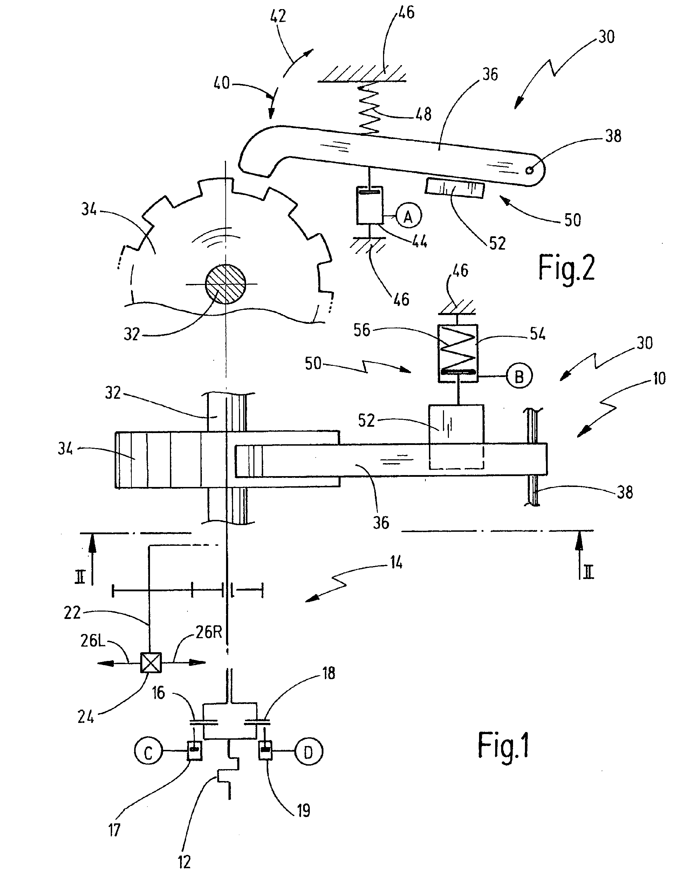

In Fig. 1 und 2 ist ein Antriebsstrang für ein Kraftfahrzeug, insbesondere einen Personenkraftwagen, schematisch dargestellt und generell mit 10 bezeichnet. Der Antriebsstrang 10 weist einen Antriebsmotor 12 wie einen Verbrennungsmotor sowie ein Getriebe 14 auf, das vorzugsweise als Stufenwechselgetriebe in Form eines Vorgelegegetriebes ausgebildet ist. Vorliegend ist das Getriebe 14 durch zwei Teilgetriebe eines Doppelkupplungsgetriebes ausgebildet, obgleich in Fig. 1 schematisch nur ein einzelner Radsatz dargestellt ist.

Der Antriebsstrang 10 beinhaltet ferner eine erste Reibkupplung 16, die mittels eines ersten Kupplungs-Hydraulikzylinders 17 betätigbar ist. Der erste Kupplungs-Hydraulikzylinder 17 weist einen einzelnen Zylinderanschluss C auf. Ferner beinhaltet das Doppelkupplungsgetriebe eine zweite Reibkupplung 18, die mittels eines zweiten Kupplungs-Hydraulikzylinders 19 betätigbar ist, der ebenfalls als einfach wirkender Hydraulikzylinder mit einem einzelnen Zylinderanschluss D ausgebildet ist.

Die zwei Reibkupplungen 16, 18 sind vorzugsweise als normalerweise offene ("normally-open") Reibkupplungen ausgebildet, beispielsweise in Form von nasslaufenden Lamellenkupplungen. Die Reibkupplungen 16, 18 können jedoch auch als normalerweise geschlossen und/oder als trockene Reibkupplungen ausgebildet sein. Eingangsglieder der zwei Reibkupplungen 16, 18 sind mit dem Antriebsmotor 12 verbunden. Jede der Reibkupplungen 16, 18 ist mit einer Eingangswelle des Doppelkupplungsgetriebes 14 verbunden, die beispielsweise konzentrisch zueinander angeordnet sein können. Das Getriebe 14 weist eine Getriebeausgangswelle 22 auf, die mit einem Differential 24 verbunden ist, das Antriebsleistung auf zwei angetriebene Räder 26L, 26R des Kraftfahrzeuges verteilt.

Der Antriebsstrang 10 weist ferner eine Parksperrenanordnung 30 auf, die beispielsweise dem Getriebe 14 zugeordnet ist. Die Parksperrenanordnung 30 beinhaltet eine Welle 32, die beispielsweise eine Welle des Getriebes 14 darstellen kann, entweder eine Getriebeeingangswelle oder bevorzugt (wie es gestrichelt dargestellt ist) die Getriebeausgangswelle 22 bzw. eine hiermit fest gekoppelte Welle.

An der Welle 32 ist ein Parksperrenrad 34 festgelegt, das, wie es in Fig. 2 dargestellt ist, an seinem Außenumfang eine Parksperrenverzahnung aufweist. Ferner beinhaltet die Parksperrenanordnung 30 eine Parksperrenklinke 36, die an einer Klinkenwelle 38 verschwenkbar gelagert ist. Die Parksperrenklinke 36 ist hierzu in einer Schließrichtung 40 betätigbar, um die Parksperrenanordnung 30 zu schließen, wobei die Parksperrenklinke in die Verzahnung des Parksperrenrades 34 eingreift. In der entgegengesetzten Öffnungsrichtung 42 werden die Parksperrenklinke 36 und das Parksperrenrad 34 voneinander entkoppelt, um die Parksperrenanordnung 30 zu öffnen.

Wie es insbesondere in Fig. 2 gezeigt ist, weist die Parksperrenanordnung 30 einen ersten Parksperren-Hydraulikzylinder 44 auf, der als einfach wirkender Zylinder mit einem einzelnen Zylinderanschluss A ausgebildet ist. Der Parksperren-Hydraulikzylinder 44 stützt sich an einem Gehäuse 46 des Antriebsstranges 10, insbesondere des Doppelkupplungsgetriebes 14 ab. Ferner beinhaltet die Parksperrenanordnung eine erste Parksperrenfeder 48, die sich ebenfalls an dem Gehäuse 46 abstützt und die Parksperrenklinke 36 in Schließrichtung 40 drückt. Der erste Parksperren-Hydraulikzylinder 44 ist dabei als Öffnungszylinder ausgebildet, um die Parksperrenklinke 36 entgegen der Kraft der ersten Parksperrenfeder 48 in Öffnungsrichtung 42 zu bewegen.

Wie es insbesondere in Fig. 1 gezeigt ist, beinhaltet die Parksperrenanordnung 30 ferner eine Verriegelungseinrichtung 50. Die Verriegelungseinrichtung 50 weist einen Riegel 52 auf, der in einer Verriegelungsposition, die in Fig. 1 gezeigt ist, die Parksperrenklinke 36 in der geöffneten Position hintergreift, so dass der erste Parksperren-Hydraulikzylinder 44 nicht ständig aktiviert werden muss, um die Parksperrenanordnung 30 geöffnet zu halten.

Die Verriegelungseinrichtung 50 beinhaltet ferner einen zweiten Parksperren-Hydraulikzylinder 54, der als einfach wirkender Zylinder mit einem einzelnen Zylinderanschluss B ausgebildet ist. Die Verriegelungseinrichtung 50 weist ferner eine zweite Parksperrenfeder 56 auf, die sich an dem Gehäuse 46 abstützt und den Riegel 52 in die in Fig. 1 gezeigte Verriegelungsposition drückt. Der zweite Parksperren-Hydraulikzylinder 54 ist dabei als Entriegelungszylinder ausgebildet und wirkt gegen die Kraft der zweiten Parksperrenfeder 56. Die Federn 48, 56 können, wie am Beispiel des zweiten Parksperren-Hydraulikzylinders 54 gezeigt, in den jeweiligen Zylinder integriert sein, können jedoch auch als separate Federelemente ausgebildet sein, wie es für die erste Parksperrenfeder 48 beispielhaft gezeigt ist.

Es versteht sich, dass das Getriebe 14 vorzugsweise eine Mehrzahl von Gangstufen aufweist, die beispielsweise mittels Schaltkupplungen ein- und auslegbar sind. Es versteht sich ferner, dass entsprechende Aktuatoren auch zum Betätigen der Schaltkupplungsanordnungen vorgesehen sind.

Zum Einlegen der Parksperre wird zunächst die Verriegelungseinrichtung 50 entriegelt, wozu dem zweiten Parksperren-Hydraulikzylinder 54 Fluid zugeführt wird. Anschließend wird, falls dies noch nicht geschehen ist, der erste Parksperren-Hydraulikzylinder 44 entlastet, so dass die Parksperrenklinke 36 durch die Kraft der ersten Parksperrenfeder 48 in die Schließrichtung 40 gedrückt wird, um eine formschlüssige Verbindung zwischen der Parksperrenklinke 36 und dem Parksperrenrad 34 einzurichten. Zum Lösen der Parksperrenanordnung 30 wird zunächst der erste Parksperren-Hydraulikzylinder 44 betätigt, und zwar gegen die Kraft der ersten Parksperrenfeder 48, um die Parksperrenklinke 36 in Öffnungsrichtung 42 zu bewegen. Anschließend wird der zweite Parksperren-Hydraulikzylinder 54, soweit noch nicht geschehen, entlastet, so dass der Riegel 52 durch die Kraft der zweiten Parksperrenfeder 56 die Parksperrenklinke 36 hintergreift und auf diese Weise in der geöffneten Position hält.

In beiden Positionen (Schließposition und Öffnungsposition) wird die Parksperrenanordnung 30 jeweils ohne Energiezufuhr durch die Wirkung der jeweiligen Federn 48, 56 gehalten.

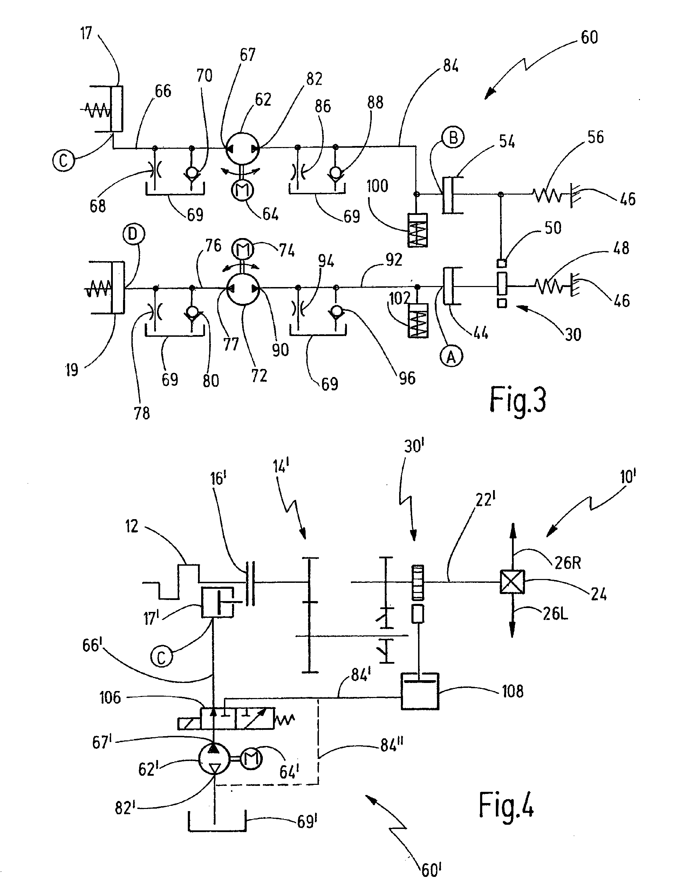

Eine Aktuatoranordnung zum Betätigen der Reibkupplungen 16, 18 und der Parksperrenanordnung 30 des Antriebsstranges 10 der Fig. 1 und 2 ist in Fig. 3 gezeigt.

Die Aktuatoranordnung 60 beinhaltet eine erste Pumpe 62, die vorzugsweise als bidirektionale Rotationspumpe ausgebildet ist und mittels eines ersten Elektromotors 64 in beiden Drehrichtungen betrieben werden kann.

Die erste Pumpe 62 weist einen ersten Pumpenanschluss 67 auf, der über eine erste direkte Verbindung 66 mit dem Anschluss C des ersten Kupplungs-Hydraulikzylinders 17 verbunden ist. Die erste Verbindung 66 ist über eine erste Blende 68 mit einem Niederdruckbereich 69 wie einem Tank verbunden. Ferner ist die erste Verbindung 66 über ein erstes Saugventil 70 in Form eines einfachen Rückschlagventils mit dem Niederdruckbereich 69 verbunden.

Zum Betätigen der zweiten Reibkupplung 18 ist eine zweite Pumpe 72 vorgesehen, die ebenfalls als bidirektionale Rotationspumpe ausgebildet ist und mittels eines zweiten Elektromotors 74 antreibbar ist.

Ein weiterer erster Pumpenanschluss 77 der zweiten Pumpe 72 ist über eine weitere erste Verbindung 76 mit dem Anschluss D des zweiten Kupplungs-Hydraulikzylinders 19 verbunden. Die weitere erste Verbindung 76 ist über eine zweite Blende 78 mit dem Niederdruckbereich 69 verbunden. Ferner ist die weitere erste Verbindung 76 über ein zweites Saugventil 80 in Form eines einfachen Rückschlagventils mit dem Niederdruckbereich 69 verbunden.

Die erste Pumpe 62 weist einen zweiten Pumpenanschluss 82 auf, der über eine zweite Verbindung 84 direkt mit dem Anschluss B des zweiten Parksperren-Hydraulikzylinders 54 verbunden ist. Die zweite Verbindung 84 ist über eine dritte Blende 86 sowie über ein drittes Saugventil 88 mit dem Niederdruckbereich 69 verbunden.

In entsprechender Weise weist die zweite Pumpe 72 einen weiteren zweiten Pumpenanschluss 90 auf, der über eine weitere zweite Verbindung 92 direkt mit dem Anschluss A des ersten Parksperren-Hydraulikzylinders 44 verbunden ist. Die weitere zweite Verbindung 92 ist über eine vierte Blende 94 und über ein viertes Saugventil 96 mit dem Niederdruckbereich 69 verbunden.

Ferner ist die zweite Verbindung 84 mit einem ersten elastisch vorgespannten Hydrospeicher 100 verbunden. In entsprechender Weise ist die weitere zweite Verbindung 92 mit einem zweiten elastisch vorgespannten Hydrospeicher 102 verbunden.

Die Arbeitsweise der Aktuatoranordnung 60 ist wie folgt. Die erste Reibkupplung 16 ist beispielsweise eine normalerweise geöffnete Reibkupplung. Wenn diese geschlossen werden soll, wird die erste Pumpe 62 mittels des elektrischen Motors 64 so angetrieben, dass Hydraulikfluid über das dritte Saugventil 88 und ggf. die dritte Blende 86 angesaugt wird und über den ersten Pumpenanschluss 67 dem ersten Kupplungs-Hydraulikzylinder 17 zugeführt wird. Durch Verändern der Drehzahl des elektrischen Motors 64 kann der Druck in dem ersten Hydraulikzylinder 17 eingestellt werden, um die Reibkupplung auf einen bestimmten Arbeitspunkt einzustellen. Hierbei erfolgt eine ständige Leckage über die erste Blende 68, so dass die Regelbarkeit des Druckes verbessert ist. Wenn die erste Reibkupplung 16 schnell geöffnet werden soll, wird die erste Pumpe 62 kurzzeitig mittels des elektrischen Motors 64 in der entgegengesetzten Richtung betrieben, so dass Hydraulikfluid aus dem ersten Reibkupplungs-Hydraulikzylinder 17 abgesaugt und über den zweiten Pumpenanschluss 82 abgegeben wird. Um zu vermeiden, dass hierbei versehentlich der zweite Parksperren-Hydraulikzylinder 54 betätigt wird, wird das kurzzeitig in die zweite direkte Verbindung 84 geführte Hydraulikfluid in dem elastisch vorgespannten ersten Hydrospeicher 100 aufgenommen.

Die Funktionsweise der zweiten Pumpe 72 zum Betätigen der zweiten Reibkupplung 18 ist identisch, wobei die zwei Reibkupplungen 16, 18 unabhängig voneinander angesteuert werden können, um bei dem Doppelkupplungsgetriebe 14 überschneidende Betätigungen zur Durchführung eines Gangwechsels durchzuführen. Wenn nach einem Fahrbetrieb die Parksperre einzulegen ist, so befindet sich der Riegel 52 der Verriegelungseinrichtung 50 zunächst unterhalb der Parksperrenklinke 36. Demzufolge wird zum Einlegen der Parksperre zunächst die erste Pumpe 62 in der zweiten Drehrichtung betrieben, so dass Hydraulikfluid über das erste Saugventil 70 und ggf. die erste Blende 68 angesaugt und in die zweite direkte Verbindung 84 zugeführt wird. Dort füllt sich zunächst der erste Hydrospeicher 100, bis dieser komplett gefüllt ist (eine Federvorspannung der Hydrospeicher weist eine kleinere Federrate auf als die Parksperrenfedern). Anschließend wird Hydraulikfluid in den zweiten Parksperren-Hydraulikzylinder 54 geführt, mittels dessen der Riegel 52 gegen die Kraft der zweiten Parksperrenfeder 56 zurückgedrückt wird (in Fig. 1 nach oben bzw. in Richtung des Gehäuses 46). Der erste Parksperren-Hydraulikzylinder 44 wird nicht angesteuert und ist über die vierte Blende 94 drucklos, so dass die Parksperrenklinke 36 dann mittels der ersten Parksperrenfeder 48 in eine Vertiefung der Verzahnung des Parksperrenrades 34 gedrückt wird, um die Parksperrenanordnung zu schließen.

Zum Öffnen der Parksperrenanordnung wird die zweite Pumpe 72 in der zweiten Drehrichtung angetrieben, um Hydraulikfluid in die weitere zweite Verbindung 92 zuzuführen, wo sich zunächst der zweite Hydrospeicher 102 füllt. Anschließend wird der erste Parksperren-Hydraulikzylinder 44 betätigt, um die Parksperrenklinke 36 gegen die Kraft der ersten Parksperrenfeder 48 aus dem Verzahnungseingriff mit dem Parksperrenrad 34 zu lösen. Sobald die Parksperrenklinke 36 weit genug in der Öffnungsrichtung 42 angehoben ist, wird der Riegel 52 mittels der zweiten Parksperrenfeder 46 unter die Parksperrenklinke gedrückt, wobei der zweite Parksperrenzylinder 54 über die dritte Blende 86 im Wesentlichen drucklos ist.

In allen anderen Betriebszuständen können die zwei Pumpen 62, 72 zum Betätigen der jeweiligen Reibkupplungen 16, 18 verwendet werden, wie oben beschrieben.

Die oben beschriebene Ausführungsform eines Antriebsstranges 10 mit einer zugeordneten Aktuatoranordnung 60 bezieht sich im Wesentlichen auf ein Doppelkupplungsgetriebe.

In Fig. 4 ist eine vereinfachte Form eines Antriebsstranges 10' dargestellt, der als automatisiertes Schaltgetriebe mit einem Antriebsmotor, einer einzelnen Reibkupplung 16' und einem einfachen Stufenwechselgetriebe 14' in Vorgelegebauweise aufgebaut ist, dessen Ausgangswelle 22' mit einem Differential 24 verbunden ist.

Die einzelne Reibkupplung 16' wird mittels eines Kupplungs-Hydraulikzylinders 17' einer Aktuatoranordnung 60' betätigt, dessen Anschluss C über ein Wegeventil 106 mit dem ersten Anschluss 67' einer Pumpe 62' verbunden ist. Der andere Anschluss der Pumpe ist mit dem Niederdruckbereich 69' verbunden. Die Pumpe 62' kann dabei als unidirektionale Pumpe ausgebildet sein, wie es in Fig. 4 angedeutet ist. Ihr Antrieb erfolgt über einen Elektromotor 64'.

Das Wegeventil 106 ist als 3/2-Wegeventil ausgebildet und mittels wenigstens eines Solenoids ansteuerbar. In der in Fig. 4 gezeigten Grundschaltstellung richtet das Wegeventil 106 eine direkte Verbindung 66' zwischen dem ersten Anschluss 67' und dem Anschluss C des Kupplungs-Hydraulikzylinders 17' ein.

In einer zweiten Stellung des Wegeventils 106 ist der Pumpenanschluss 67' über die Verbindung 84' direkt mit einem Anschluss eines einzelnen Parksperren-Hydraulikzylinders 108 verbunden, der eine Parksperrenanordnung 30' an der Getriebeausgangswelle 22' betätigt.

Auch bei dieser Ausführungsform ist es möglich, anstelle eines Wegeventils 106 den zweiten Pumpenanschluss 82' direkt mit dem Anschluss des Parksperren-Hydraulikzylinders 108 zu verbinden, wie es bei 84" in Fig. 4 gestrichelt dargestellt ist.

Generell ist es auch möglich, die Verbindung 84' über eine weitere Wegeventilanordnung mit zwei Parksperren-Hydraulikzylindern zu verbinden, wie sie beispielsweise in Fig. 1 und 2 gezeigt sind.

Aktuatoranordnungen der oben beschriebenen Art lassen sich beispielsweise auch für die Aktuierung einer Parksperrenanordnung verwenden, wie sie in dem Dokument DE 10 2006 022 963 A1 beschrieben ist. Auch bei dieser Parksperrenanordnung sind vorzugsweise zwei Hydraulikzylinder vorgesehen, die über die Aktuatoranordnung 60 oder 60' angesteuert werden können.

## Patentansprüche

1. Aktuatoranordnung (60; 60') für einen Antriebsstrang (10; 10'), der wenigstens eine Reibkupplung (16, 18; 16') zur Übertragung von Antriebsmoment und ein Getriebe (14; 14') aufweist, wobei die Reibkupplung (16, 18; 16') mittels eines Kupplungs-Hydraulikzylinders (17, 19, 17') betätigbar ist, der zur Betätigung der Reibkupplung (16, 18; 16') direkt mit einem ersten Pumpenanschluss (67, 77; 67') einer elektromotorisch angetriebenen Pumpe (62, 72; 62') verbunden ist, derart, dass die Reibkupplung (16, 18; 16') durch Verändern der Drehzahl der Pumpe (62, 72; 62') betätigbar ist,
**gekennzeichnet durch** eine Parksperren-Aktuatoreinrichtung (44, 54; 108) zur Betätigung einer Parksperrenanordnung (30; 30') des Antriebsstranges (10; 10'), wobei
die Parksperren-Aktuatoreinrichtung wenigstens einen Parksperren-Hydraulikzylinder (44, 54; 108) aufweist, der mit der Pumpe (62, 72; 62') verbunden ist, der-art, dass die Parksperrenanordnung (30; 30') **durch** Verändern der Drehrichtung und/oder der Drehzahl der Pumpe (62, 72; 62') betätigbar ist.

2. Aktuatoranordnung nach Anspruch 1, **dadurch gekennzeichnet, dass** die Pumpe (62, 72) als bidirektionale Pumpe mit dem ersten und einem zweiten Pumpenanschluss ausgebildet ist, wobei der Kupplungs-Hydraulikzylinder (17, 19) mit dem ersten Pumpenanschluss (67, 77) verbunden ist und wobei der Parksperren-Hydraulikzylinder (44, 54) mit dem zweiten Pumpenanschluss (82, 90) verbunden ist.

3. Aktuatoranordnung nach Anspruch 2, **dadurch gekennzeichnet, dass** an einer Verbindung (84, 92) zwischen dem zweiten Pumpenanschluss (82, 90) und dem Parksperren-Hydraulikzylinder (44, 54) ein elastisch vorgespannter Hydrospeicher (100, 102) angeschlossen, ist.

4. Aktuatoranordnung nach einem der Ansprüche 2 - 3, **dadurch gekennzeichnet, dass** eine Verbindung (66, 76) zwischen dem ersten Pumpenanschluss und dem Kupplungs-Hydraulikzylinder (17, 19) und/oder eine Verbindung (84, 92) zwischen dem zweiten Pumpenanschluss und dem Parksperren-Hydraulikzylinder (44, 54) über eine Blende (68, 78, 86, 94) mit einem Niederdruckbereich (69) verbunden ist.

5. Aktuatoranordnung nach einem der Ansprüche 2 - 4, **dadurch gekennzeichnet, dass** eine Verbindung (66, 76) zwischen dem ersten Pumpenanschluss und dem Kupplungs-Hydraulikzylinder (17, 19) und/oder eine Verbindung (84, 92) zwischen dem zweiten Pumpenanschluss und dem Parksperren-Hydraulikzylinder (44, 54) über ein Saugventil (70, 80, 88, 96) mit einem Niederdruckbereich verbunden ist.

6. Aktuatoranordnung nach einem der Ansprüche 1 - 5, **dadurch gekennzeichnet, dass** die Aktuatoranordnung (60) einen ersten Kupplungs-Hydraulik-zylinder (17) zum Betätigen einer ersten Reibkupplung (16) des Antriebsstranges (10) und einen zweiten Kupplungs-Hydraulikzylinder (19) zum Betätigen einer zweiten Reibkupplung (18) des Antriebsstranges (10) sowie eine erste, direkt mit dem ersten Kupplungs-Hydraulikzylinder (17) verbundene Pumpe (62) und eine zweite, direkt mit dem zweiten Kupplungs-Hydraulikzylinder (19) verbundene Pumpe (72) aufweist.

7. Aktuatoranordnung nach einem der Ansprüche 1 - 6, **dadurch gekennzeichnet, dass** die Parksperren-Aktuatoreinrichtung einen ersten Parksperren-Hydraulikzylinder (44) zum Öffnen oder zum Schließen der Parksperrenanordnung (30) und einen zweiten Parksperren-Hydraulikzylinder (54) zum Ver- oder Entriegeln der Parksperrenanordnung (30) in der geöffneten oder in der geschlossenen Position aufweist.

8. Aktuatoranordnung nach Anspruch 6 und nach Anspruch 7, **dadurch gekennzeichnet, dass** der erste Parksperren-Hydraulikzylinder (44) mit der ersten oder der zweiten Pumpe (72) verbunden ist, wobei der zweite Parksperren-Hydraulikzylinder (54) mit der anderen Pumpe (62) verbunden ist.

9. Antriebsstrang (10; 10') mit einer Reibkupplung (16, 18; 16') einer Parksperrenanordnung (30; 30') und mit einer Aktuatoranordnung (60; 60') nach einem der Ansprüche 1-8.

## Claims

1. Actuator arrangement (60; 60') for a drive train (10; 10'), which has at least one friction clutch (16, 18; 16') for transmitting drive torque and has a transmission (14; 14'), wherein the friction clutch (16, 18; 16') can be actuated by means of a hydraulic clutch cylinder (17, 19; 17'), which is connected directly to a first pump port (66, 77; 67') of a pump (62, 72; 62') driven by an electric motor in order to actuate the friction clutch (16, 18; 16'), such that the friction clutch (16, 18; 16') can be actuated by varying the speed of the pump (62, 72; 62'),
**characterized by** a parking lock actuator device (44, 54; 108) for actuating a parking lock arrangement (30; 30') of the drive train (10; 10'), wherein
the parking lock actuator device has at least one hydraulic parking lock cylinder (44, 54; 108), which can be connected to the pump (62, 72; 62'), such that the parking lock arrangement (30; 30') can be actuated by varying the direction of rotation and/or the speed of the pump (62, 72; 62').

2. Actuator arrangement according to Claim 1, **characterized in that** the pump (62, 72) is designed as a bidirectional pump with the first and a second pump port, wherein the hydraulic clutch cylinder (17, 19) is connected to the first pump port (67, 77) and wherein the hydraulic parking lock cylinder (44, 54) is connected to the second pump port (82, 90).

3. Actuator arrangement according to Claim 2, **characterized in that** an elastically preloaded hydraulic accumulator (100, 102) is connected to a connection (84, 92) between the second pump port (82, 90) and the hydraulic parking lock cylinder (44, 54).

4. Actuator arrangement according to one of Claims 2 - 3, **characterized in that** a connection (66, 76) between the first pump port and the hydraulic clutch cylinder (17, 19) and/or a connection (84, 92) between the second pump port and the hydraulic parking lock cylinder (44, 54) is connected to a low-pressure region (69) via an orifice (68, 78, 86, 94).

5. Actuator arrangement according to one of Claims 2 - 4, **characterized in that** a connection (66, 76) between the first pump port and the hydraulic clutch cylinder (17, 19) and/or a connection (84, 92) between the second pump port and the hydraulic parking lock cylinder (44, 54) is connected to a low-pressure region (69) via a suction valve (70, 80, 88, 96).

6. Actuator arrangement according to one of Claims 1-5, **characterized in that** the actuator arrangement (60) has a first hydraulic clutch cylinder (17) for actuating a first friction clutch (16) of the drive train (10), a second hydraulic clutch cylinder (19) for actuating a second friction clutch (18) of the drive train (10), a first pump (62), which is connected directly to the first hydraulic clutch cylinder (17), and a second pump (72), which is connected directly to the second hydraulic clutch cylinder (19).

7. Actuator arrangement according to one of Claims 1-6, **characterized in that** the parking lock actuator device has a first hydraulic parking lock cylinder (44) for opening or closing the parking lock arrangement (30) and a second hydraulic parking lock cylinder (54) for locking or unlocking the parking lock arrangement (30) in the open or in the closed position.

8. Actuator arrangement according to Claim 6 and according to Claim 7, **characterized in that** the first hydraulic parking lock cylinder (44) is connected to the first or to the second pump (72), wherein the second hydraulic parking lock cylinder (54) is connected to the other pump (62).

9. Drive train (10; 10') having a friction clutch (16, 18; 16'), a parking lock arrangement (30; 30') and an actuator arrangement (60; 60') according to one of Claims 1-8.

## Revendications

1. Agencement d'actionneur (60 ; 60') pour une transmission (10 ; 10') qui comprend au moins un embrayage à friction (16, 18 ; 16') pour transmettre un moment d'entraînement et une boîte de vitesses (14 ; 14'), l'embrayage à friction (16, 18 ; 16') pouvant être actionné au moyen d'un cylindre hydraulique d'embrayage (17, 19 ; 17') qui est, en vue de l'actionnement de l'embrayage à friction (16, 18 ; 16'), connecté directement à un premier raccord de pompe (67, 77 ; 67') d'une pompe (62, 72 ; 62') entraînée par un moteur électrique, de telle sorte que l'embrayage à friction (16, 18 ; 16') puisse être actionné par modification de la vitesse de rotation de la pompe (62, 72 ; 62'),
**caractérisé par** un dispositif d'actionneur de verrouillage de stationnement (44, 54 ; 108) pour l'actionnement d'un agencement de verrouillage de stationnement (30 ; 30') de la transmission (10 ; 10'),
le dispositif d'actionneur de verrouillage de stationnement comprenant au moins un cylindre hydraulique de verrouillage de stationnement (44, 54 ; 108) qui est connecté à la pompe (62, 72 ; 62') de telle sorte que l'agencement de verrouillage de stationnement (30 ; 30') puisse être actionné par modification du sens de rotation et/ou de la vitesse de rotation de la pompe (62, 72 ; 62').

2. Agencement d'actionneur selon la revendication 1, **caractérisé en ce que** la pompe (62, 72) est réalisée sous forme de pompe bidirectionnelle avec le premier raccord de pompe et un deuxième raccord de pompe, le cylindre hydraulique d'embrayage (17, 19) étant connecté au premier raccord de pompe (67, 77), et le cylindre hydraulique de verrouillage de stationnement (44, 54) étant connecté au deuxième raccord de pompe (82, 90).

3. Agencement d'actionneur selon la revendication 2, **caractérisé en ce qu'**un accumulateur hydraulique (100, 102) précontraint élastiquement est raccordé à une connexion (84, 92) entre le deuxième raccord de pompe (82, 90) et le cylindre hydraulique de verrouillage de stationnement (44, 54).

4. Agencement d'actionneur selon l'une quelconque des revendications 2 et 3, **caractérisé en ce qu'**une connexion (66, 76) entre le premier raccord de pompe et le cylindre hydraulique d'embrayage (17, 19) et/ou une connexion (84, 92) entre le deuxième raccord de pompe et le cylindre hydraulique de verrouillage de stationnement (44, 54) est/sont reliée(s) à une région basse pression (69) par le biais d'un diaphragme (68, 78, 86, 94).

5. Agencement d'actionneur selon l'une quelconque des revendications 2 à 4, **caractérisé en ce qu'**une connexion (66, 76) entre le premier raccord de pompe et le cylindre hydraulique d'embrayage (17, 19) et/ou une connexion (84, 92) entre le deuxième raccord de pompe et le cylindre hydraulique de verrouillage de stationnement (44, 54) est/sont reliée(s) à une région basse pression par le biais d'une soupape d'aspiration (70, 80, 88, 96).

6. Agencement d'actionneur selon l'une quelconque des revendications 1 à 5, **caractérisé en ce que** l'agencement d'actionneur (60) comprend un premier cylindre hydraulique d'embrayage (17) pour l'actionnement d'un premier embrayage à friction (16) de la transmission (10) et un deuxième cylindre hydraulique d'embrayage (19) pour l'actionnement d'un deuxième embrayage à friction (18) de la transmission (10) ainsi qu'une première pompe (62) connectée directement au premier cylindre hydraulique d'embrayage (17) et une deuxième pompe (72) connectée directement au deuxième cylindre hydraulique d'embrayage (19).

7. Agencement d'actionneur selon l'une quelconque des revendications 1 à 6, **caractérisé en ce que** le dispositif d'actionneur de verrouillage de stationnement comprend un premier cylindre hydraulique de verrouillage de stationnement (44) pour ouvrir ou pour fermer l'agencement de verrouillage de stationnement (30) et un deuxième cylindre hydraulique de verrouillage de stationnement (54) pour bloquer ou débloquer l'agencement de verrouillage de stationnement (30) dans la position ouverte ou dans la position fermée.

8. Agencement d'actionneur selon la revendication 6 et selon la revendication 7, **caractérisé en ce que** le premier cylindre hydraulique de verrouillage de stationnement (44) est connecté à la première ou à la deuxième pompe (72), le deuxième cylindre hydraulique de verrouillage de stationnement (54) étant connecté à l'autre pompe (62).

9. Transmission (10 ; 10') comprenant un embrayage à friction (16, 18 ; 16'), un agencement de verrouillage de stationnement (30 ; 30') et un agencement d'actionneur (60 ; 60') selon l'une quelconque des revendications 1 à 8.
